# EUROPÄISCHE PATENTSCHRIFT

(11) **EP 1 031 368 B1**
(45) Veröffentlichungstag und Bekanntmachung des Hinweises auf die Patenterteilung: **11.08.2004**
(21) Anmeldenummer: 00102927.1
(22) Anmeldetag: 12.02.2000
(51) Int. Cl.: B01D 35/143, B01D 29/41

(54) **Filterzustands-Anzeiger**
Filter condition indicator
Indicateur pour la condition d' un filtre

(30) Priorität: 24.02.1999 DE 29903276 U
(43) Veröffentlichungstag der Anmeldung: 30.08.2000
(73) Patentinhaber: HANS SASSERATH & CO KG, 41352 Korschenbroich (DE)
(72) Erfinder: Hecking, Willi, 41238 Mönchengladbach (DE)
(74) Vertreter: Weisse, Jürgen, Dipl.-Phys.

(56) Entgegenhaltungen:
- GB-A- 1 387 462
- US-A- 2 954 751
- US-A- 3 011 470
- US-A- 3 183 882
- US-A- 3 231 094
- US-A- 3 493 119

## Beschreibung

Die Erfindung betrifft einen Filterzustands-Anzeiger, der auf den bei Flüssigkeits-Durchfluß durch ein Filter auftretenden Differenzdruck anspricht, bei welchem der Differenzdruck auf gegenüberliegende Stirnflächen eines Kolbens wirkt, der in zwei fluchtenden, mit ihren offenen Seiten einander zugewandten Zylinderräumen geführt ist, von denen ein erster mit dem Filtereinlaßdruck und ein zweiter mit dem Filterauslaßdruck des Filters beaufschlagbar ist, und der Kolben von einer vorgespannten Feder gegen den Differenzdruck in Richtung auf die Betriebsstellung vorbelastet ist, ein Anzeigeglied durch den Kolben aus einer Betriebsstellung in eine Anzeigestellung bewegbar ist, wenn dieser Differenzdruck einen vorgegebenen Wert überschreitet, und Mittel zum Halten des so bewegten Anzeigegliedes in der Anzeigestellung vorgesehen sind, wenn der Differenzdruck anschließend durch Unterbrechung des Flüssigkeits-Durchflusses wegfällt,.

Filter zum Filtern von Flüssigkeiten haben die Aufgabe, Verschmutzungen in den Flüssigkeiten zurückzuhalten. Das bedingt, daß sich solche Filter im Laufe der Zeit zusetzen. Das äußert sich darin, daß der bei Flüssigkeits-Durchfluß der an dem Filter zwischen Einlaß und Auslaß auftretende Differenzdruck ansteigt. Der Filter muß dann gewartet, also ausgetauscht oder gereinigt werden. Es ist bekannt, den an dem Filter auftretenden Differenzdruck als Kriterium für den Filterzustand zu benutzen. Wenn der Differenzdruck ein vorgegebenes Maß überschreitet, ist eine Wartung erforderlich.

Ein Differenzdruck tritt aber nur auf, wenn Flüssigkeit durch das Filter strömt. Bei Wegfall des Flüssigkeits-Durchflusses, d.h. wenn z.B. in einem Trinkwasser-System kein Wasser verbraucht wird, tritt auch kein Differenzdruck an dem Filter auf.

Durch die GB 1 387 642 ist ein Filterzustands-Anzeiger mit einem Kolben bekannt, der einerseits von dem Druck stromauf von dem Filter und andererseits von dem Druck stromab von dem Filter beaufschlagt ist. Der Kolben steht unter dem Einfluß einer vorgespannten Feder, welche normalerweise den Differenzdruck, am Filter überwindet und den Kolben in einer Normalstellung hält. Eine mechanische Verriegelungsvorrichtung bewirkt, daß der Kolben, wenn er einmal unter dem Einfluß eines erhöhten Differenzdruckes gegen die Wirkung der Feder aus seiner Normalstellung herausbewegt worden ist, nicht mehr in die Normalstellung zurückkehren kann, auch wenn der Differenzdruck nach Unterbrechung des Durchflusses wegfällt.

Durch die US 2,952,751 ist eine Filterzustandsanzeige bekannt, bei welcher ein Kolben auf einer Seite von dem Filtereinlaßdruck und auf der anderen Seite von dem Filterauslaßdruck beaufschlagt ist. Der Differenzdruck wirkt gegen eine Feder. In dem Kolben ist ein Anzeigestift verschiebbar geführt. Bei einer bestimmten Stellung des Kolbens wird der Anzeigestift von dem Kolben entkoppelt. Der dann auf den Anzeigestift dann einseitig wirkende Filtereinlaßdruck schiebt den Anzeigestift gegenüber dem Kolben in eine Anzeigestellung vor. In dieser Anzeigestellung wird der Anzeigestift dann durch Reibungskräfte gehalten. Da er von dem Kolben entkoppelt ist, wird der auch nicht wieder in seine Ausgangsstellung zurückgeführt, wenn der Differenzdruck bei Absperren des Durchflusses wegfällt und der Kolben in seine Ausgangsstellung zurückkehrt.

Die US 3,183,882 betrifft einen von einem Differenzdruck beaufschlagten, federbelasteten Kolben, der bei einem Hub eine irreversible Bewegung einer Anzeigevorrichtung auslöst.

Die US 3,011,470 offenbart einen federbelasteten, von einer Druckdifferenz beaufschlagten Kolben, der bei Überschreiten einer bestimmten Druckdifferenz in eine Anzeigestellung springt und eine Anzeigevorrichtung mitnimmt. Die Anzeigevorrichtung wird in der Anzeigestellung mechanisch verriegelt.

Alle diese Einrichtungen arbeiten mit einer mechanischen Auslöse- oder Verriegelungsvorrichtung.

Der Erfindung liegt die Aufgabe zugrunde, einen ohne eine solche mechanische Auslöseoder Verriegelungsvorrichtung arbeitenden Filterzustands-Anzeiger vorzusehen, der den Filterzustand unabhängig davon anzeigt, ob gerade ein Flüssigkeits-Durchfluß stattfindet oder nicht.

Erfindungsgemäß wird diese Aufgabe dadurch gelöst, daß die Mittel zum Halten des Anzeigegliedes in der Anzeigestellung Ventilmittel zwischen dem Filterauslaßdruck und dem zweiten Zylinderraum enthalten, welche einen Druckausgleich zwischen dem zweiten Zylinderraum und dem Filterauslaßdruck zulassen, wenn der Filterauslaßdruck geringer ist als der Druck in dem zweiten Zylinderraum, aber einen Druckausgleich sperren, wenn der Filterauslaßdruck höher ist als der Druck in dem zweiten Zylinderraum, so daß nach einem Wegfall der Strömung und damit des Druckabfalls am Filter der bei einem Absinken des Filterauslaßdruckes in die Anzeigestellung bewegte Kolben durch den in dem zweiten Zylinderraum eingeschlossenen geringeren Druck in der Anzeigestellung gehalten wird.

Die Erfindung betrifft auch eine vorteilhafte Konstruktion eines solchen Filterzustands-Anzeigers und eine vorteilhafte Konstruktion eines mit einem solchen Filterzustands-Anzeiger ausgerüsteten Filters. Diese Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.
- Fig. 1: zeigt einen Längsschnitt durch einen Filter mit Anschlußflansch und Filterzustands-Anzeiger.
- Fig.2: ist eine perspektivische Darstellung des Filters mit Anschlußflansch und Filterzustands-Anzeiger.
- Fig.3: zeigt in vergrößertem Maßstab einen Längsschnitt durch den Filter.
- Fig.4: ist eine auseinandergezogene, perspektivische Darstellung des Filters.
- Fig.5: zeigt in vergrößertem Maßstab als Ausschnitt X von Fig. 1 den Filterzustands-Anzeiger in seiner Betriebsstellung, d.h. bei noch nicht zugesetztem Filter.
- Fig.6: zeigt den Filterzustands-Anzeiger in seiner Anzeigestellung, d.h. in einem Zustand, in welcher er einen übermäßigen Druckabfall an dem Filter und damit die Notwendigkeit einer Wartung anzeigt.

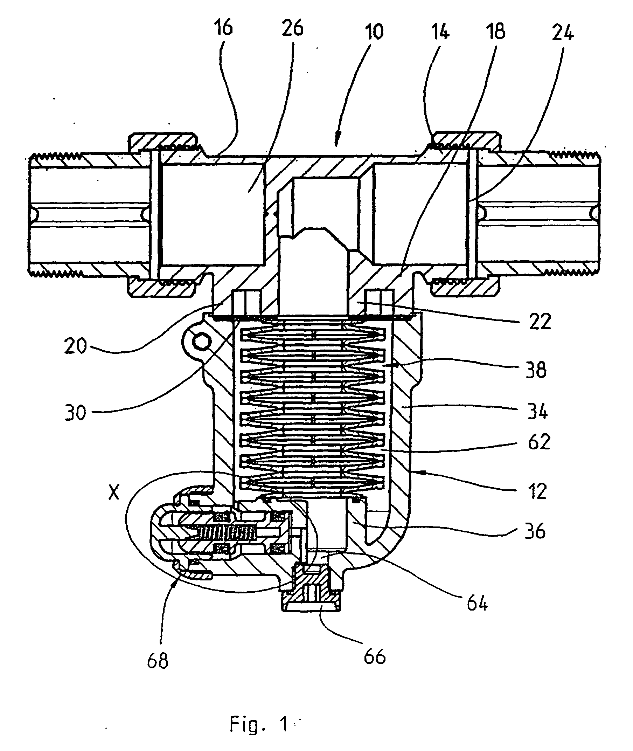

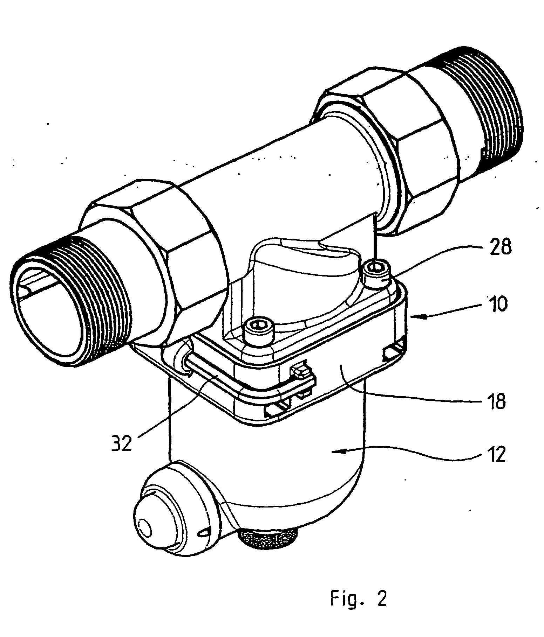

In Fig.1 und 2 ist mit 10 ein Anschlußflansch für einen Filter 12 bezeichnet. Der Anschlußflansch 10 ist mit einem Einlaßstutzen 14 und mit einem Auslaßstutzen 16 in eine (nicht dargestellte) Rohrleitung eingebaut. Der Anschlußflansch bildet einen quadratischen Flanschteil 18. Der Flanschteil 18 bildet einen im Querschnitt kreisförmigen äußeren Kragen 20 und einen dazu koaxialen inneren Kragen 22. Der von dem Einlaßstutzen 14 gebildete Einlaß 24 steht mit dem Raum innerhalb des inneren Kragens 22 in Verbindung. Der von dem Auslaßstutzen 16 gebildete Auslaß 26 steht mit dem Raum zwischen innerem und äußerem Kragen 22 bzw. 20 in Verbindung.

An den Anschlußflansch 10 ist der Filter 12 durch Innensechskantschrauben 28 unter Zwischenlage einer Dichtung 30 verschraubt. Die Innensechskantschrauben 28 können mittels eines Sechskantschlüssels 32 gelöst bzw. festgezogen werden. Der Sechskantschlüssel 32 ist an den Anschlußflansch 10 angekipst.

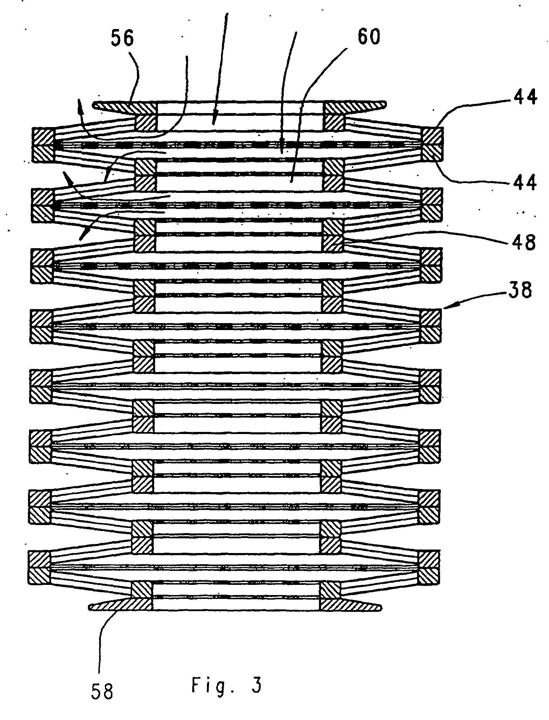

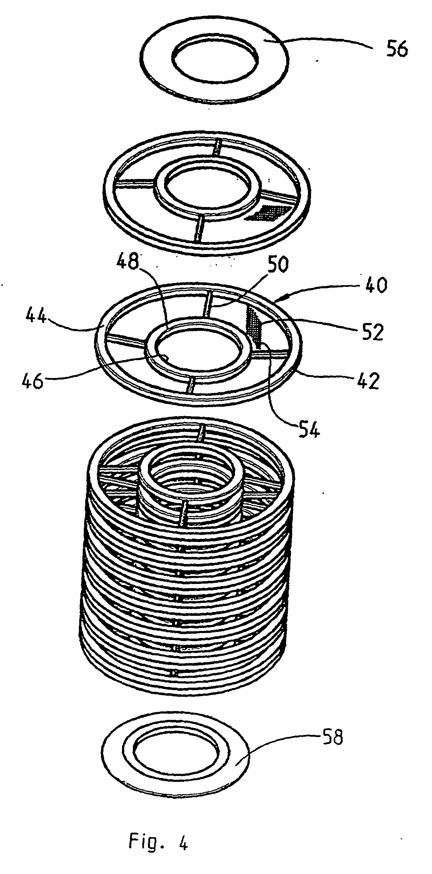

Der Filter 12 weist ein topfförmiges Filtergehäuse 34 auf. Das Filtergehäuse 34 bildet auf seinem Boden einen Kragen 36 fluchtend mit dem inneren Kragen 22. Zwischen den Kragen 22 und 36 erstreckt sich ein balgenartiges Fiterpaket 38. Der Aufbau dieses Filterpakets 38 ist am besten aus den Figuren 3 und 4 ersichtlich.

Das Filterpaket besteht aus einer Mehrzahl von ringförmigen als Kunststoff-Spritzgußteile hergestellten Filtergliedern 40. Jedes Filterglied 40 weist einen den äußeren Rand 42 bildenden Außenring 44 und einen dazu koaxialen, den inneren Rand 46 bildenden Innenring 48 auf. Die Außen- und Innenringe sind jeweils durch radiale Stege 50 miteinander verbunden. Die Flächen 52 zwischen Innen- und Außenring 48 bzw. 44 und Stegen 50 sind durch kunststoffspritztechnisch eingespritztes Filtergewebe 54 ausgefüllt. Wie aus Fig.3 am besten ersichtlich ist, sind die Filterglieder 40 abwechselnd an ihren äußeren Rändern 42 mit den Außenringen 44 und an ihren inneren Rändern 46 mit den Innenringen 48 miteinander verbunden. Durch axiales Auseinanderziehen entsteht, wie in Fig.3 dargestellt ist, eine balgenartige Struktur. Das dem Anschlußflansch 10 benachbarte Filterglied ist mit seinem Innenring 48 über eine erste Zwischenringscheibe 56 mit dem inneren Kragen 22 des Anschlußflansches 10 verbunden. Das Filterglied am entgegengesetzten Ende des Filterpakets 38 ist mit seinem Innenring 48 über eine zweite Zwischenringscheibe 58 mit dem von dem Filtergehäuse 34 auf dessen Boden gebildeten Kragen 36 verbunden.

Das Filterpaket 38 bildet somit einen Innenraum 60, der mit dem Einlaß 24 in Verbindung steht, und einen Ringraum 62 zwischen Filterpaket 38 und Filtergehäuse 34, der mit dem Auslaß in Verbindung steht. Die Flüssigkeit strömt wie in Fig.3 dargestellt ist, vom Einlaß 24 durch den Innenraum 60, durchsetzt das Filtergewebe 54 der Filterglieder 40, strömt in den Ringraum 62 und von dort zum Auslaß.

Innerhalb des Kragens 36 ist in dem Filtergehäuse 12 ein Auslaß 64 gebildet, der normalerweise durch einen herausschraubbaren Stopfen 66 verschlossen ist.

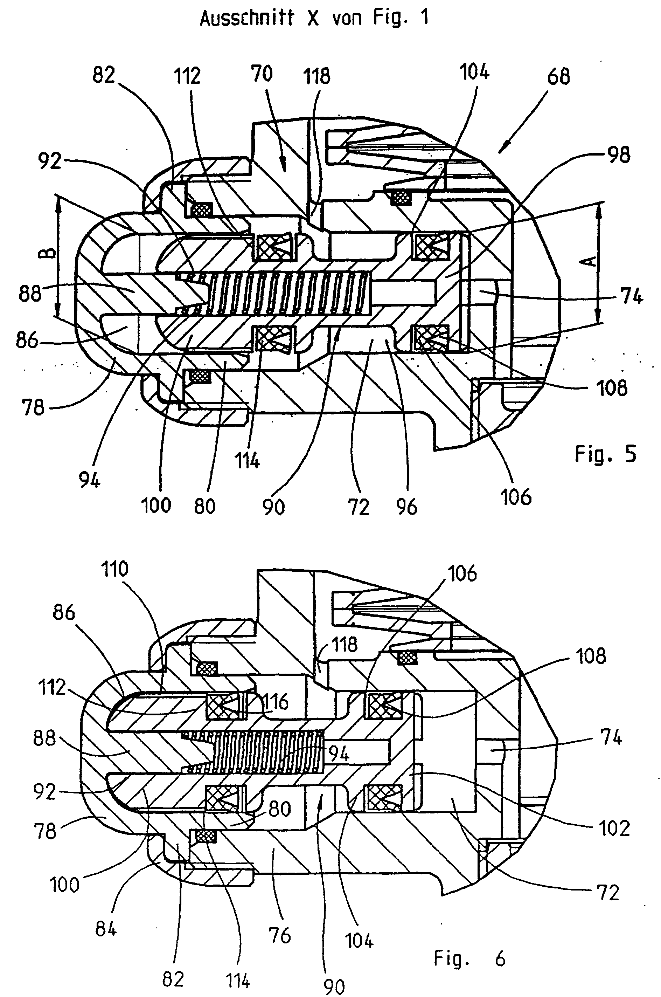

Der Filter bildet einen Strömungswiderstand für den Flüssigkeitsstom. Dadurch tritt an dem Filter bei Flüssigkeits-Durchfluß eine Druckdifferenz auf. Der Filterauslaßdruck ist geringer als der Filtereinlaßdruck. Der Filter hält Verschmutzungen, die von dem Flüssigkeitsstrom mitgeführt werden, zurück. Dadurch setzt sich der Filter im Laufe der Zeit zu. Der Filter muß dann gewartet werden, entweder indem der Filter gereinigt oder indem das Filterpaket ausgetauscht wird. Die Wartungsbedürftigkeit des Filters wird durch einen Filterzustands-Anzeiger 68 angezeigt. Diese Anzeige erfolgt unabhängig davon, ob gerade ein Flüssigkeits-Durchfluß durch den Filter stattfindet oder nicht. Der Filterzustands-Anzeiger 68 sitzt am Boden des topfförmigen Filtergehäuses 34. Der Filterzustands-Anzeiger 68 ist als Ausschnitt X in Fig.5 und 6 dargestellt.

Ein Gehäuse 70 des Filterzustands-Anzeigers 68 ist an das Filtergehäuse 34 angeformt. Das Gehäuse 70 bildet einen ersten Zylinderraum 72. Die Achse des ersten Zylinderraumes 72 verläuft radial zur Achse des Zylindergehäuses 34 und des Kragens 36. Der erste Zylinderraum 72 ist über eine radiale Bohrung 74 mit dem Inneren des Kragens 36 und damit mit dem Innenraum 60 des Filterpakets 38 und dem Einlaß 24 verbunden. Das Gehäuse 70 des Filterzustands-Anzeigers 68 bildet einen Stutzen 76. Eine Kappe 78 aus einem transparenten Material ist mit einem Stutzen 80 in den Stutzen 76 des Gehäuses 70 eingesteckt und liegt mit einem Flansch 82 an der Stirnfläche des Stutzens 76 an. Die Kappe 78 wird von einer Überwurfmutter 84 gehalten, die über den Flansch 82 greift und auf den Stutzen 76 aufgeschraubt ist.

Der Stutzen 80 der Kappe 78 bildet einen zweiten Zylinderraum 86. Der zweite Zylinderraum 86 ist gleichachsig zu dem ersten Zylinderraum 72 und hat den gleichen Durchmesser wie dieser. Die offenen Enden der beiden Zylinderräume 72 und 86 sind einander zugewandt und liegen im Abstand voneinander. Die Kappe 78 weist an ihrer Stirnfläche einen nach innen ragenden, zentralen Führungsansatz 88 auf. Der Führungsansatz 88 erstreckt sich koaxial zu der zweiten Zylinderkammer 86. Ein Kolben 90 ist an einem Ende in der ersten Zylinderkammer 72 geführt. Am anderen Ende weist der Kolben 90 eine von der kappenseitigen Stirnfläche ausgehende, zentrale Sacklochbohrung 92 auf. Mit dieser Sacklochbohrung 92 ist der Kolben 90 auf dem Führungsansatz 88 geführt. In der Sacklochbohrung 92 sitzt weiterhin eine vorgespannte Schraubenfeder 94. Die Schraubenfeder 94 stützt sich an der Stirnfläche des Führungsansatzes 88 und am Grunde des Sacklochbohrung 92 an dem Kolben 90 ab.

Der Kolben 90 weist im mittleren Bereich eine Einschnürung 96 auf. Dadurch werden zu beiden Seiten der Einschnürung 96 Kolbenabschnitte 98 und 100 gebildet.

Der Kolbenabschnitt 98 ist in dem ersten Zylinderraum 72 geführt. Der Durchmesser A des Kolbenabschnitts 98 entspricht etwa dem Durchmesser des ersten Zylinderraumes. Auf seiner in Fig.5 und 6 rechten Stirnfläche weist der Kolbenabschnitt 98 Rippen 102 auf, so daß der Filtereinlaßdruck von der Bohrung 74 stets voll auf die Stirnfläche des Kolbenabschnitts 98 wirken kann. In der Mantelfläche des Kolbenabschnitts 98 ist eine Umfangsnut 104 gebildet. In dieser Umfangsnut 104 sitzt ein Dichtring 106 von im wesentlichen rechteckigem Querschnitt. Auf der der Filtereinlaßdruckseite zugewandten Stirnfläche ist der Dichtring 106 mit einer im Querschnitt v-formigen Ausnehmung 108 versehen. Dadurch bildet der Dichtring 106 zwei Dichtlippen, die sich unter dem Einfluß des Filtereinlaßdrucks an die Innenwandung des ersten Zylinderraumes 72 bzw. an den Grund der Umfangsnut 104, also an den Kolben 90 anlegen.

Der zweite, in Fig.5 und 6 linke, Kolbenabschnitt 100 ist mit der Sacklochbohrung 92 auf dem Führungsansatz 88 geführt. Der Durchmesser des Kolbenabschnitts 100 ist geringfügig geringer als der Durchmesser B des zweiten Zylinderraumes 86. Dadurch wird zwischen der Mantelfläche des zweiten Kolbenabschnitts 100 und der Innenwandung des zweiten Zylinderraumes 86 ein Ringspalt 110 gebildet. In der Mantelfläche des zweiten Kolbenabschnitts 100 ist eine Umfangsnut 112 gebildet. In dieser Umfangsnut 112 sitzt ein Dichtring 114. Der Dichtring 114 ist ähnlich ausgebildet wie der Dichtring 106. Der Dichtring 114 hat im wesentlichen rechteckigen Querschnitt und weist auf seiner der Einschnürung 96 zugewandten Stirnseite ringsherum eine im Querschnitt v-förmige Ausnehmung 116 auf. Durch die Ausnehmung 116 bildet zwei Dichtlippen. Unter dem Einfluß einer positiven Druckdifferenz zwischen dem um die Einschnürung 96 herum gebildeten Ringraum und dem zweiten Zylinderraum 86, d.h. wenn der Druck in dem Ringraum größer ist als der Druck in dem Zylinderraum 86, legt sich die äußere Dichtlippe an die Innenwandung des zweiten Zylinderraumes 86 und die innere Dichtlippe an den Grund der Umfangsnut 112, d.h. an den Kolben 90 an.

Der Ringraum um die Einschnürung 96 herum steht über eine Bohrung 118 mit dem Ringraum 62 zwischen Filterpaket 38 und Filtergehäuse 34 in Verbindung, also mit dem Filterauslaßdruck.

Die beschriebene Anordnung arbeitet wie folgt:

Im normalen Betriebszustand wird der Kolben 90 von der Schraubenfeder 94 mach rechts in Fig.5 und 6 in seine Betrietisstellung gedrückt. Die Druckdifferenz am Filter 12, also die Differenz von Eingangs- und Filterauslaßdruck bei Flüssigkeits-Durchfluß ist relativ gering. Die Umfangsnut 112 mit dem Dichtring 114 befindet sich, wie aus Fig.5 ersichtlich ist, außerhalb des zweiten Zylinderraumes 86. Der Teil des zweiten Zylinderraumes 86 vor der Stirnfläche des zweiten Kolbenabschnitts steht über den Ringspalt 110, den Ringraum um die Einschnürung 96 herum und die Bohrung 116 mit dem Auslaß 26 in Verbindung. In dem zweiten Zylinderraum 86 herrscht daher der Auslaßdruck, während über Bohrung 74 der erste Zylinderraum vor der Stirnfläche des ersten Kolbenabschnitts 98 von dem Einlaßdruck beaufschlagt ist. An dem Kolben wirkt daher von rechts nach links eine Kraft proportional der Kolbenfläche und der Druckdifferenz zwischen Einlaß- und Auslaßdruck. Im normalen Betrieb reicht diese Kraft nicht aus, um die Vorspannung der Schraubenfeder 94 zu überwinden.

In diesem Zustand ist die in Fig.5 linke Stirnfläche des Kolbens 90 im Abstand von der Stirnfläche der transparenten Kappe angeordnet. Eine auf der Stirnfläche des Kolbens 90 angebrachte Farbmarkierung ist noch hinter die Überwurfmutter zurückgezogen und praktisch nicht sichtbar. Der Benutzter erkennt hieraus, daß der Strömungswiderstand des Filters noch unterhalb eines durch die Vorspannung der Feder vorgegebenen, zulässigen Schwellwertes liegt. Der Filter ist noch nicht verstopft.

Wenn der Filter sich mit der Zeit zusetzt, dann steigt der Strömungswiderstand des Filters und damit die bei Flüssigkeits-Durchfluß auftretende Druckdifferenz zwischen Einlaß- und Auslaßdruck. Der Kolben 90 wird bei Strömungs-Durchfluß gegen die Wirkung der Schraubenfeder 94 nach links in Fig.5 und 6 in die in Fig.6 dargestellte Position gedrückt. Dabei wird der Dichtring 114 in den zweiten Zylinderraum 86 hineingedrückt. Da der Dichtring 114, wie geschildert, eine Strömung aus dem zweiten Zylinderraum 86 heraus zu dem Ringraum um die Einschnürung 96 hin zuläßt, erfolgt bei dieser Bewegung ein Druckausgleich. Der zweite Zylinderraum 86 bleibt auf dem niedrigeren Filterauslaßdruck. An dem Kolben 90 wirkt während des Flüssigkeits-Durchflusses weiterhin die Druckdifferenz zwischen Eingangs- und Filterauslaßdruck.

Wenn der Flüssigkeits-Durchfluß aufhört, weil z.B. gerade kein Wasser gezapft wird, dann fällt die Druckdifferenz zwischen Einlaß 24 und Auslaß 26 weg. Es erfolgt ein Druckausgleich und auf beiden Seiten des Filterpakets 38 herrscht der -höhere-Einlaßdruck. Dadurch tritt aber eine positive Druckdifferenz zwischen dem dann im Ringraum um die Einschnürung 96 herrschenden Einlaßdruck und dem in dem zweiten Zylinderraum 86 von dem Flüssigkeits-Durchfluß her noch herrschenden, niedrigeren Filterauslaßdruck. Dadurch werden die Dichtlippen des Dichtringes 114 an die Innenwand des zweiten Zylinderraumes 86 bzw. an den Kolben 90 angelegt. Ein Druckausgleich von dem Ringraum zum zweiten Zylinderraum 86 hin kann nicht stattfinden. Vielmehr wird der in dem Zylinderraum 86 herrschende niedrigere Filterauslaßdruck gekapselt. Auf den Kolben 90 wirkt weiterhin die Druckdifferenz zwischen den Filtereinlaßdruck und dem durch den Flüssigkeits-Durchfluß verminderten Filterauslaßdruck. Der Kolben 90 wird daher auch bei Druckausgleich zwischen Einlaß 24 und Auslaß 26 nicht durch die Schraubenfeder 94 in ihre Betriebsstellung von Fig.5 zurückgedrückt sondern bleibt in der "Anzeigestellung" von Fig.6. In dieser Stellung ist die z.B. farbig markierte Stirnfläche des Kolbens 90 durch die transparente Kappe 78 hindurch sichtbar und zeigt dem Benutzer an, daß eine Wartung des Filters vorgenommen werden muß. Diese Anzeige ist unabhängig davon, ob gerade ein Flüssigkeits-Durchfluß stattfindet oder nicht.

Wenn die Wartung stattfindet, wird der Filter zunächst durch einen (nicht dargestellten) Absperrhahn vom Wassernetz getrennt. Dann wird der Stopfen 66 herausgedreht und damit der Filter entleert, so daß das Filtergehäuse 34 abgenommen werden kann. Wenn das geschieht, sinkt der Druck im Filter, und damit auch der von rechts in Fig.6 auf den Dichtring wirkende Druck auf Atmosphärendruck. Jetzt ist der in dem Zylinderraum 86 gekapselte, frühere Filterauslaßdruck links von dem Dichtring 114 wieder größer als der Atmosphärendruck rechts von dem Dichtring 114. Der Dichtring 114 läßt einen Druckausgleich zu. Damit herrscht auf beiden Seiten des Kolbens 90 Atmosphärendruck. Die Schraubenfeder 94 drückt den Kolben 90 wieder nach rechts in die in Fig.5 dargestellte Betriebsstellung.

## Patentansprüche

1. Filterzustands-Anzeiger, der auf den bei Flüssigkeits-Durchfluß durch ein Filter (12) auftretenden Differenzdruck anspricht, bei welchem
(a) der Differenzdruck auf gegenüberliegende Stirnflächen eines Kolbens (90) wirkt, der in zwei fluchtenden, mit ihren offenen Seiten einander zugewandten Zylinderräumen (98,100) geführt ist, von denen ein erster mit dem Filtereinlaßdruck und ein zweiter mit dem Filterauslaßdruck des Filters (12) beaufschlagt ist,
(b) der Kolben (90) von einer vorgespannten Feder (94) gegen den Differenzdruck in Richtung auf die Betriebsstellung vorbelastet ist
(c) ein Anzeigeglied (90), das durch den Kolben (90) aus einer Betriebsstellung in eine Anzeigestellung bewegbar ist, wenn dieser Differenzdruck einen vorgegebenen Wert überschreitet, und
(d) Mittel (114) zum Halten des so bewegten Anzeigegliedes (90) in der Anzeigestellung vorgesehen sind, wenn der Differenzdruck anschließend durch Unterbrechung des Flüssigkeits-Durchflusses wegfällt
**dadurch gekennzeichnet, daß**
(e) die Mittel zum Halten des Anzeigegliedes in der Anzeigestellung Ventilmittel (114) zwischen dem Filterauslaßdruck und dem zweiten Zylinderraum (100) enthalten, welche einen Druckausgleich zwischen dem zweiten Zylinderraum (100) und dem Filterauslaßdruck zulassen, wenn der Filterauslaßdruck geringer ist als der Druck in dem zweiten Zylinderraum, aber einen Druckausgleich sperren, wenn der Filterauslaßdruck höher ist als der Druck in dem zweiten Zylinderraum, so daß nach einem Wegfall der Strömung und damit des Druckabfalls am Filter der bei einem Absinken des Filterauslaßdruckes in die Anzeigestellung bewegte Kolben (90) durch den in dem zweiten Zylinderraum eingeschlossenen geringeren Druck in der Anzeigestellung gehalten wird.

2. Filterzustands-Anzeiger nach Anspruch 1, **dadurch gekennzeichnet, daß**
als Ventilmittel zwischen dem Kolben (90) und der Innenwandung des zweiten Zylinderraumes (86) eine Lippendichtung (114) angeordnet ist, welche
- in der Anzeigestellung in den zweiten Zylinderraum (86) bewegt wird und
- durch eine positive Druckdifferenz zwischen dem Filterauslaßdruck und dem Druck in dem zweiten Zylinderraum (86) an den Kolben (90) und die Innenwandung des Zylinderraumes (86) anlegbar ist aber
- bei einer negativen Druckdifferenz einen Strömungsdurchgang von dem zweiten Zylinderraum (86) zu dem Filterauslaßdruck hin zuläßt.

3. Filterzustands-Anzeiger nach Anspruch 2, **dadurch gekennzeichnet, daß** die Lippendichtung ein in einer Umfangsnut (112) des Kolbens (90) sitzender, gummielastischer Dichtring (114) ist, der auf seiner Filterauslaßdruckseitigen Stirnfläche eine v-förmige Vertiefung (116) aufweist, so daß zu beiden Seiten dieser Vertiefung (116) Lippen zur Anlage an dem Kolben (90) bzw, der Innenwandung des Zylinderraumes (86) gebildet sind.

4. Filterzustands-Anzeiger nach Anspruch 2 oder 3, **dadurch gekennzeichnet, daß** der Kolben (90) in einem Mittelbereich eine Einschnürung (96) aufweist, so daß ein mit dem Filterauslaßdruck beaufschlagter Ringraum gebildet wird.

5. Filterzustands-Anzeiger nach Anspruch 4, **dadurch gekennzeichnet, daß** zwischen dem Kolben (90) und der Innenwandung des ersten Zylinderraumes (72) eine Lippendichtung angeordnet ist, welche
- durch eine positive Druckdifferenz zwischen dem Filtereinlaßdruck und dem Druck in dem Ringraum an den Kolben (90) und die Innenwandung des Zylinderraumes (72) anlegbar ist, aber
- bei einer negativen Druckdifferenz einen Strömungsdurchgang von dem Ringraum zu dem Filterauslaßdruck hin zuläßt.

6. Filterzustands-Anzeiger nach einem der Ansprüche 1 bis 5, **dadurch gekennzeichnet, daß** der zweite Zylinderraum (86) in einer transparenten Kappe (78) gebildet ist, durch welche hindurch die Stellung des Kolbens (90) beobachtbar ist.

7. Filterzustands-Anzeiger nach Anspruch 6, **dadurch gekennzeichnet, daß** der Kolben (90) an seiner Stirnfläche mit einer farbigen Markierung versehen ist und der Kolben (90) in seiner Anzeigestellung mit seiner markierten Stirnfläche dicht hinter der Stirnfläche der Kappe (78) sitzt, so daß die Markierung durch die Kappe (78) hindurch sichtbar wird.

8. Filterzustands-Anzeiger nach Anspruch 6 oder 7, **dadurch gekennzeichnet, daß**
(a) die Kappe (78) an ihrer Stirnfläche einen nach innen ragenden zentralen Führungsansatz (88) aufweist, auf welchem der Kolben (90) mit einer Längsausnehmung (92) geführt ist, und
(b) die vorgespannte Feder (94) in der Längsausnehmung (92) sitzt und einerseits an dem Führungsansatz (88) und andererseits an dem Kolben (90) abgestützt ist.

9. Filterzustands-Anzeiger nach einem der Ansprüche 1 bis 8, **dadurch gekennzeichnet, daß**
(a) der Filterzustands-Anzeiger an einem topfförmigen Filtergehäuse (34) vorgesehen ist, das mit einem Einlaß (24) und Auslaß (26) enthaltenden Anschlußflansch (10) verbunden ist,
(b) in dem Filtergehäuse (34) ein balgenartiges Filterpaket (38) mit ringscheibenförmigen Filtergliedern (40) angeordnet ist, die abwechselnd an ihren Innenrändern (46) und an ihren Außenrändern (42) miteinander verbunden sind, und
(c) der mit dem Einlaß (24) verbundene Innenraum (60) des Filterpaketes (38) mit der ersten Zylinderkammer (72) des Filterzustands-Anzeigers (68) verbunden und der Ringraum (62) zwischen Filterpaket (38) und Filtergehäuse (34) mit der zweiten Zylinderkammer (86) des Filterzustands-Anzeigers (68) verbindbar ist.

10. Filterzustands-Anzeiger nach Anspruch 9, **dadurch gekennzeichnet, daß** das topfförmige Filtergehäuses (34) mit einem durch einen Stopfen (66) verschließbaren Auslaß (64) versehen ist.

11. Filterzustands-Anzeiger nach Anspruch 10, **dadurch gekennzeichnet, daß**
(a) am Boden des Filtergehäuses (34) ein Kragen (36) gebildet ist, der mit dem Innenrand des benachbarten Filtergliedes (40) des Filterpaketes (38) verbunden ist,
(b) der Auslaß (64) innerhalb des Kragens (36) gebildet ist,
(c) der Filterzustands-Anzeiger (68) mit der Kolbenachse radial zu dem Kragen (36) neben diesem angeordnet ist und
(d) der erste Zylinderraum (72) durch eine Bohrung (74) mit dem Raum innerhalb des Kragens (36) verbunden ist.

12. Filterzustands-Anzeiger nach Anspruch 11, **dadurch gekennzeichnet, daß**
(a) der Anschlußflansch (10) einen Anschlußstutzen mit zwei zueinander koaxialen Kragen (20,22) aufweist, wobei der Raum innerhalb des inneren Kragens (22) mit dem Einlaß (24) und der Raum zwischen den Kragen (20,24) mit dem Auslaß (26) verbunden ist, und
(b) der innere Rand (46) eines dem Anschlußflansch (10) benachbarten Filtergliedes (40) mit dem inneren Kragen (22) des Anschlußflansches (10) verbunden ist.

13. Filterzustands-Anzeiger nach Anspruch 12, **dadurch gekennzeichnet, daß** die Verbindung der inneren Ränder (46) der besagten Filterglieder (40) mit den benachbarten Kragen (22 bzw. 36) über Zwischenringscheiben (56 bzw. 58) erfolgt.

14. Filterzustands-Anzeiger nach einem der Ansprüche 9 bis 13, **dadurch gekennzeichnet, daß**
(a) die Filterglieder (40) einen den äußeren Rand (42) bildenden Außenring (44) und einen dazu koaxialen Innenring (48) aufweisen, die durch radiale Stege (50) miteinander verbunden sind und
(b) die Flächen (52) zwischen Innen- und Außenring (48 bzw. 44) und Stegen (50) durch kunststoffspritztechnisch eingespritztes Filtergewebe (54) ausgefüllt sind.

## Claims

1. Filter state display responding to the differential pressure occurring at a liquid flow through a filter wherein
(a) the differential pressure acts on two opposite front sides of a piston (90) guided in two aligned cylindrical spaces (98, 100) facing each other with their open ends, the first of which being exposed to the inlet pressure of the filter and the second being exposed to the oulet pressure of the filter (12),
(b) the piston (90) is biased against the differential pressure in the direction of the operation position by a biasing spring (94),
(c) a display member (90) is shiftable by the piston (90) from an operation position towards a display position if the differential pressure exceeds a given value, and
(d) means (114) are provided for holding the display member (90) in the display position if the differential pressure decreases afterwards due to an interruption of the liquid flow,
**characterized in that**
(e) the means for holding the display member in the display position comprise valve means (114) between the filter outlet pressure and the second cylindrical space (100), which allow a pressure compensation between the second cylindrical space (100) and the filter outlet pressure, if the filter outlet pressure is lower than the pressure in the second cylindrical space but block the pressure compensation, if the filter outlet pressure is higher than the pressure in the second cylindrical space, so that after the lapse of the flow and thereby the pressure reduction at the filter the piston (90) which has been moved towards the display position during the decreaseing of the filter outlet pressure is held in the display position by the lower pressure enclosed in the second cylindrical space.

2. Filter state display according to claim 1, **characterized in that**
a lip seal (114) is arranged between the piston (90) and the inner wall of the second cylindrical space (86) as a valve means, which
- is shifted into the second cylindrical space (86) in the display position and
- is attachable to the piston (90) and the inner wall of the cylindrical space (86) by the positive pressure differential between the filter outlet pressure and the pressure in the second cylindrical space, but
- allows a flow passage from the second cylindrical space (86) to the filter outlet pressure at a negative pressure differential.

3. Filter state display according to claim 2, **characterized in that** the lip seal is a rubber elastic sealing ring (114) placed in a circumferential recess (112) of the piston (90), which is provided with a v-shaped recess (116) at its filter outlet-side front surface, such that the lips are formed on both sides of said recess (116) for attaching the piston (90) or the inner wall of the cylindrical space (86), respectively.

4. Filter state display according to claim 2 or 3, **characterized in that** the piston (90) is provided with a neck (96) at its middle portion, such that an annular space exposed to filter outlet pressure is formed.

5. Filter state display according to claim 4, **characterized in that** a lip seal is arranged between the piston (90) and the inner wall of the first cylindrical space (72) which
- is attachable to the piston (90) and the inner wall of the cylindrical space (72) by the positive pressure differential between the filter inlet pressure and the pressure in the annular space, but
- allows a flow passage from the annular space to the filter outlet pressure at a negative pressure differential.

6. Filter state display according to one of claims 1 to 5, **characterized in that** the second cylindrical space (86) is formed in a transparent cap (78) through which the postion of the piston (90) is observeable.

7. Filter state display according to claim 6, **characterized in that** the piston (90) is provided with a coloured marking at its front surface and that in the display position the piston (90) is placed close behind the front surface of the cap (78) with its marked front surface, such that the marking can be seen through the cap (78).

8. Filter state display according to claim 6 or 7, **characterized in that**
(a) the cap (78) is provided with a central guiding projection projecting inwards, whereon the piston (90) is guided with a longitudinal recess (92), and
(b) the biased spring (94) is placed in such longitudinal recess (92) and abuts the guiding projection (88) on one side and the piston (90) on the other side.

9. Filter state display according to one of the claims 1 to 8, **characterized in that**
(a) the filter state display is provided in a cup-shaped filter housing (34) connected to a connection flange (10) with an inlet (24) and an outlet (26),
(b) a balg-like filter package (38) with disk-shaped filter members (40) is arranged in the filter housing (34), the filter members (40) being interconnected in turn with their inner edges (46) and their outer edges (42), and
(c) the inner space (60) of the filter package (38) connected to the inlet (24) is connected to the first cylindrical chamber (72) of the filter state display (68) and the annular space (62) between the filter package (38) and the filter housing (34) is connectable with the second cylindrical chamber (86) of the filter state display (68).

10. Filter state display according to claim 9, **characterized in that** the cup-shaped filter housing (34) is provided with an outlet (64) which is closeable with a plug (66).

11. Filter state display according to claim 10, **characterized in that**
(a) a collar (36) is formed at the bottom of the filter housing (34) which is connected to the inner edge of the adjacent filter member (40) of the filter package (3 8),
(b) the outlet (64) is formed within the collar (36),
(c) the filter state display (68) is arranged radially with the piston axis to such collar (36) and adjacent thereto and
(d) the first cylindrical space (72) is connected to the space within the collar (36) by a bore hole (74).

12. Filter state display according to claim 11, **characterized in that**
(a) the connection flange (10) is provided with a connecting socket with two aligned collars (20, 22) wherein the space between the inner collar (22) is connected to the inlet (24) and the space between the collar (20, 24) is connected to the outlet (26), and
(b) the inner edge (46) a filter member (40) adjacent to the connection flange (10) is connected to the inner collar (22) of the connection flange (10).

13. Filter state display according to claim 12, **characterized in that** the connection of the inner edges (46) of said filter members (40) to the adjacent collar (22 or 36, respectively) is effected by intermediate disks (56 or 58, respectively).

14. Filter state display according to one of claims 9 to 13, **characterized in that**
(a) the filter members (40) are provided with an outer ring (44) forming the outer edge (42) and an aligned inner ring (48) inter-connected by radial webs (50) and
(b) the spaces (52) between the inner- and the outer ring (48 and 44, respectively) and the webs (50) are filled with plastic mould filter tissue (54).

## Revendications

1. Indicateur d'état de filtre répondant à la pression différentielle présente lors du passage d'un liquide à travers un filtre (12), pour lequel
(a) la pression différentielle agit sur les faces avant opposées d'un piston (90) guidé dans deux chambres cylindriques (98,100) alignées l'une sur l'autre et tournées l'une vers l'autre avec leurs faces ouvertes, la pression à l'entrée du filtre pouvant être appliquée à la première chambre cylindrique et la pression à la sortie du filtre (12) pouvant être appliquée à la seconde chambre cylindrique,
(b) le piston (90) est sollicité par la charge d'un ressort (94) taré agissant contre l'effet de la pression différentielle en direction de la position de fonctionnement,
(c) un organe indicateur (90) est susceptible d'être déplacé par le piston (90) pour passer d'une position de fonctionnement à une position d'indication lorsque cette pression différentielle dépasse une valeur prédéfinie, et
(d) des moyens (114) destinés à maintenir l'organe indicateur (90) ainsi déplacé dans la position d'indication sont prévus lorsque la pression différentielle finit par être supprimée suite à l'interruption du passage du liquide,
**caractérisé en ce que**
(e) les moyens destinés à maintenir l'organe indicateur dans la position d'indication contiennent des moyens de soupape (114) entre la pression à la sortie du filtre et la seconde chambre cylindrique (100) qui permettent une compensation de la pression entre la seconde chambre cylindrique (100) et la pression à la sortie du filtre lorsque la pression à la sortie du filtre est inférieure à la pression dans la seconde chambre cylindrique, et empêchent par contre une compensation de la pression lorsque la pression à la sortie du filtre est supérieure à la pression dans la seconde chambre cylindrique de sorte qu'après la suppression du courant, et ainsi, de la pression dans le filtre, le piston (90) déplacé dans la position d'indication suite à la chute de la pression à la sortie du filtre est maintenu en position d'indication par la pression plus faible enfermée dans la seconde chambre cylindrique.

2. Indicateur d'état de filtre selon la revendication 1, **caractérisé en ce que**
des lèvres d'étanchéité (114) sont disposées en tant que moyens de soupape entre le piston (90) et la paroi intérieure de la seconde chambre cylindrique (86), les lèvres d'étanchéité
- étant déplacées dans la position d'indication à l'intérieur de la seconde chambre cylindrique (86) et
- étant susceptibles de s'appliquer contre le piston (90) et la paroi intérieure de la chambre cylindrique (86) suite à une différence de pression positive entre la pression à la sortie du filtre et la pression dans la seconde chambre cylindrique (86), autorisant par contre
- en cas de différence de pression négative, un passage du courant de la seconde chambre cylindrique (86) vers la pression à la sortie du filtre.

3. Indicateur d'état de filtre selon la revendication 2, **caractérisé en ce que** les lèvres d'étanchéité sont une bague d'étanchéité (114) en gomme élastique se trouvant dans une rainure circonférentielle (112) du piston (90) et présentant, sur sa face avant située du côté de la pression de sortie du filtre, un creux (116) en forme de V de sorte que des lèvres venant s'appliquer contre le piston (90) et la paroi intérieure respectivement de la chambre cylindrique (86) sont formées des deux côtés de ce creux (116).

4. Indicateur d'état de filtre selon la revendication 2 ou 3, **caractérisé en ce que** le piston (90) présente dans un domaine médian un rétrécissement (96) de sorte qu'il se forme une chambre annulaire à laquelle est appliquée la pression de sortie du filtre.

5. Indicateur d'état de filtre selon la revendication 4, **caractérisé en ce que** des lèvres d'étanchéité sont disposées entre le piston (90) et la paroi intérieure de la première chambre cylindrique (72), les lèvres d'étanchéité
- étant susceptibles de s'appliquer contre le piston (90) et la paroi intérieure de la chambre cylindrique (72) suite à une différence de pression positive entre la pression à l'entrée du filtre et la pression dans la chambre annulaire, autorisant par contre
- en cas de différence de pression négative, un passage du courant de la chambre annulaire vers la pression à la sortie du filtre.

6. Indicateur d'état de filtre selon l'une quelconque des revendications 1 à 5, **caractérisé en ce que** la seconde chambre cylindrique (86) est formée dans un cache transparent (78) à travers lequel la position du piston (90) est susceptible d'être observée.

7. Indicateur d'état de filtre selon la revendication 6, **caractérisé en ce que** le piston (90) est pourvu sur sa face avant d'un marquage de couleur et que le piston (90) se trouve dans sa position d'indication avec sa face avant marquée juste derrière la face avant du cache (78) de sorte que le marquage devient visible à travers le cache (78).

8. Indicateur d'état de filtre selon la revendication 6 ou 7, **caractérisé en ce que**
(a) le cache (78) présente sur sa face avant un embout de guidage (88) central faisant saillie vers l'intérieur sur lequel le piston (90) est guidé avec un creux longitudinal (92), et
(b) le ressort taré (94) se trouve dans le creux longitudinal (92) et s'appuie, d'une part, contre l'embout de guidage (88) et, d'autre part, contre le piston (90).

9. Indicateur d'état de filtre selon l'une quelconque des revendications 1 à 8, **caractérisé en ce que**
(a) l'indicateur d'état de filtre est prévu sur un corps de filtre (34) en forme de pot qui est relié à une bride de raccordement (10) contenant l'entrée (24) et la sortie (26),
(b) un paquet filtrant (38) en forme de soufflet muni d'éléments filtrants (40) en forme de rondelles circulaires est disposé dans le corps de filtre (34), les éléments filtrants étant reliés les uns aux autres soit sur leurs bords intérieurs (46), soit sur leurs bords extérieurs (42), et
(c) la chambre intérieure (60) du paquet filtrant (38) reliée à l'entrée (24) est reliée à la première chambre cylindrique (72) de l'indicateur d'état de filtre (68) et la chambre annulaire (62) située entre le paquet filtrant (38) et le corps de filtre (34) est susceptible d'être reliée à la seconde chambre cylindrique (86) de l'indicateur d'état de filtre (68).

10. Indicateur d'état de filtre selon la revendication 9, **caractérisé en ce que** le corps de filtre (34) en forme de pot est pourvu d'une sortie (64) susceptible d'être fermée par un bouchon (66).

11. Indicateur d'état de filtre selon la revendication 10, **caractérisé en ce que**
(a) une collerette (36) reliée au bord intérieur de l'élément filtrant adjacent (40) du paquet filtrant (38) est formée dans le fond du corps de filtre (34),
(b) la sortie (64) est formée à l'intérieur de la collerette (36),
(c) l'indicateur d'état de filtre (68) est disposé avec l'axe du piston radialement par rapport à la collerette (36) en étant à côté de celle-ci et
(d) la première chambre cylindrique (72) est reliée par un perçage (74) à la chambre située à l'intérieur de la collerette (36).

12. Indicateur d'état de filtre selon la revendication 11, **caractérisé en ce que**
(a) la bride de raccordement (10) présente un manchon de raccordement muni de deux collerettes (20,22) coaxiales l'une par rapport à l'autre, la chambre située à l'intérieur de la collerette intérieure (22) étant reliée à l'entrée (24) et la chambre située entre les collerettes (20,24) étant reliée à la sortie (26), et
(b) le bord intérieur (46) d'un élément filtrant (40) adjacent à la bride de raccordement (10) est relié à la collerette intérieure (22) de la bride de raccordement (10).

13. Indicateur d'état de filtre selon la revendication 12, **caractérisé en ce que** la connexion des bords intérieurs (46) desdits éléments filtrants (40) avec les collerettes adjacentes (22 et 36 respectivement) s'effectue par l'intermédiaire de rondelles circulaires intercalaires (56 et 58 respectivement).

14. Indicateur d'état de filtre selon l'une quelconque des revendications 9 à 13, **caractérisé en ce que**
(a) les éléments filtrants (40) présentent un anneau extérieur (44) formant le bord extérieur (42) et un anneau intérieur (48) coaxial au premier qui sont reliés ensemble par des traverses radiales (50) et
(b) les surfaces (52) entre les anneaux intérieur et extérieur (48 et 44 respectivement) et les traverses (50) sont remplies de tissu filtrant (54) injecté grâce à une technique d'injection de matière plastique.
